# EUROPEAN PATENT SPECIFICATION

(11) **EP 2 059 332 B1**
(45) Date of publication and mention of the grant of the patent: **06.03.2013**
(21) Application number: 07784514.7
(22) Date of filing: 22.06.2007
(51) Int. Cl.: B01D 61/16, C02F 1/44

(54) **METHOD OF HEAVY METAL REMOVAL FROM INDUSTRIAL WASTEWATER USING SUBMERGED ULTRAFILTRATION OR MICROFILTRATION MEMBRANES**
VERFAHREN ZUR ENTFERNUNG VON SCHWERMETALLEN AUS INDUSTRIELLEM ABWASSER UNTER VERWENDUNG VON UNTERGETAUCHTEN ULTRAFILTRATIONS- ODER MIKROFILTRATIONSMEMBRANEN
PROCÉDÉ D'ÉLIMINATION DE MÉTAUX LOURDS D'EAUX USÉES INDUSTRIELLES À L'AIDE DE MEMBRANES D'ULTRAFILTRATION OU DE MICROFILTRATION IMMERGÉES

(30) Priority: 07.09.2006 US 516843
(43) Date of publication of application: 20.05.2009
(73) Proprietor: Nalco Company, Naperville, IL 60563-1198 (US)
(72) Inventor: MUSALE, Deepak, A., Aurora, Illinois 60502 (US); JOHNSON, Brian, S., Warrenville, Illinois 60555 (US)
(74) Representative: Polypatent
(86) International application number: PCT/US2007/071855
(87) International publication number: WO 2008/030652

(56) References cited:
- DE-A1-102004 011 122
- US-A- 5 346 627
- US-A- 5 372 726
- US-A- 5 510 040
- US-A1- 2006 160 226

## Description

### FIELD OF THE INVENTION

This invention pertains to a method of heavy metal removal from industrial wastewater via the use of a submerged ultrafiltration or microfiltration membrane system.

### BACKGROUND

Due to stringent environmental regulations and / or water shortages, industries have to remove heavy metals from their wastewaters before discharge or reuse. Most of the wastewaters are treated by commodity DTC/TTC chemistries or specialty polymeric DTC compounds and then the precipitated metals are separated in a clarifier. In recent years, ultrafiltration (UF) or microfiltration (MF) membranes are increasingly being used for solid-liquid separation instead of clarifiers, because UF/MF membrane processes are much more compact and result in water with much better quality than clarifiers; specifically there are almost no suspended solids and negligible turbidity. The UF or MF permeate can be reused with or without any further treatment, depending on purpose of reuse. Therefore, industrial wastewaters when treated with polymeric chelants and subsequently filtered through UF or MF membranes result in high metal removal and also higher membrane fluxes than those treated with commodity DTC/TTC/TMT chemistries.

Although cross-flow UF or MF processes have been used for this application, the operating cost of these processes is usually high due to high cross-flow energy required to minimize membrane fouling. In last decade or so, submerged UF and MF membranes have been successfully used for the high-suspended solids separation application such as in Membrane Bioreactors (MBR) or low suspended solid applications such as raw water treatment and tertiary treatment. Submerged membranes operate at low fluxes (10-60 LMH) in these applications, as membranes get fouled at higher fluxes. For minimizing membrane fouling, aeration is used to scour the membrane surface, either continuously (e.g. in MBR) or intermittently (e.g. in MBR, raw water and tertiary treatment). Therefore, it is of interest to adapt these relatively low operating cost submerged membrane systems for other high solid applications such as heavy metal removal in conjunction with polymeric chelants, which function as metal complexing agents as well as membrane flux enhancers. The application of polymer chelants in filtration systems is discussed in U.S. Patent Nos. 5,346,627 and 6,258,277.

US 5,510,040 discloses the removal of selenium from water by complexation with a polymer made by reacting an ethylenedichloride-ammonia condensation polymer with carbon disulfide.

US 5,372,726 relates to compounds for the treatment of water polluted by metal ions obtainable by the reaction of potassium or sodium hydroxide in aqueous solution with thiocarbamide and potassium or sodium hyposulfate.

US 5,346,627 relates to a method for removing metals from a fluid stream. The method involves treating the fluid stream with a water soluble ethylene dichloride ammonia polymer that contains dithiocarbamate salt groups to form a complex with the metals. The fluid stream is subsequently subjected to a filtration step.

### SUMMARY OF THE INVENTION

The present invention provides a method of removing one or more heavy metals from industrial wastewater by use of a membrane separation process comprising the steps according to claim 1.

### BRIEF DESCRIPTION OF THE DRAWING

Figure 1 illustrates a general process scheme for processing industrial wastewater containing heavy metals, which includes a submerged microfiltration membrane/filtration membrane as well as an additional membrane for further processing of the permeate from said submerged microfiltration membrane/ultrafiltration membrane.
Figure 2 shows TMP as a function of flux for treated industrial wastewater that contained 15 ppm Cu⁺⁺.
Figure 3 shows TMP as a function of flux for treated industrial wastewater that contained 773 ppm Cu⁺⁺.
Figure 4 shows TMP as a function of time and volume concentration for simulated wastewater-containing 100 ppm Cu⁺⁺.

### DETAILED DESCRIPTION OF THE INVENTION

### Definitions of Terms:

"UF" means ultrafiltration.
"MF" means microfiltration.
"DTC" means dimethyl dithiocarbamate.
"TTC" means trithiocarbonate.
"TMT" means trimercaptotriazine.
"TMP" means trans membrane pressure.
"LMH" means liters per meters² per hour.
"Chelant scavengers" means compounds that are capable of complexing with chelants. These scavengers are usually, but are not limited to, the salt form.
"Submerged Membrane" means a membrane that is completely submerged under the body of liquid to be filtered.
"Polymeric Chelant" means a polymeric molecule that reacts and /or complexes with heavy metals.
"Amphoteric polymer" means a polymer derived from both cationic monomers and anionic monomers, and, possibly, other non-ionic monomer(s). Amphoteric polymers can have a net positive or negative charge. The amphoteric polymer may also be derived from zwitterionic monomers and cationic or anionic monomers and possibly nonionic monomers. The amphoteric polymer is water soluble.
"Cationic polymer" means a polymer having an overall positive charge. The cationic polymers of this invention are prepared by polymerizing one or more cationic monomers, by copolymerizing one or more nonionic monomers and one or more cationic monomers, by condensing epichlorohydrin and a diamine or polyamine or condensing ethylenedichloride and ammonia or formaldehyde and an amine salt. The cationic polymer is water soluble.
"Zwitterionic polymer" means a polymer composed from zwitterionic monomers and, possibly, other non-ionic monomer(s). In zwitterionic polymers, all the polymer chains and segments within those chains are rigorously electrically neutral. Therefore, zwitterionic polymers represent a subset of amphoteric polymers, necessarily maintaining charge neutrality across all polymer chains and segments because both anionic charge and cationic charge are introduced within the same zwitterionic monomer. The zwitterionic polymer is water-soluble.
"Anionic polymer" means a polymer having an overall negative charge. The anionic polymers of this invention are prepared by polymerizing one or more anionic monomers or by copolymerizing one or more non-ionic monomers and one or more anionic monomers. The anionic polymer is water-soluble.

### Preferred Embodiments:

As stated above, the invention provides for a method of removing one or more heavy metals from industrial wastewater by use of either a submerged microfiltration membrane or a submerged ultrafiltration membrane.

If chelants are present in the industrial wastewater, then pH needs to be adjusted to de-complex the metal from the chelant in the industrial wastewater, and there needs to be a subsequent or simultaneous addition of one or more chelant scavengers. Chelant will usually de-complex from a metal when the pH is less than four, preferably the pH is adjusted in the range of from about 3 to about 4.

In one embodiment, the chelant scavengers contain Ca or Mg or Al or Fe.

In another embodiment, the chelant scavenger containing Fe is selected from the group consisting of: ferrous chloride; ferrous sulfate; ferric chloride; ferric sulfate; or a combination thereof.

Various types and amounts of acids and bases maybe utilized to adjust the pH of industrial wastewater. In one embodiment, the base may be selected from the group consisting of magnesium and calcium salts such as chlorides and hydroxides. In another embodiment, the base is selected from the group consisting of hydroxides of sodium, potassium, ammonium and the like. Various iron compounds and dosages may be utilized to further treat the pH adjusted industrial wastewater. In yet another embodiment the dosages of iron compounds used may be from about 100 ppm to about 10,000 ppm, depending upon the level of chelant present in the industrial wastewater.

One step of removing heavy metals from an industrial wastewater system is the step of: adjusting the pH of the system to achieve hydroxide precipitation of said heavy metal in said industrial wastewater. Hydroxide precipitation occurs when the wastewater pH is such that the metal hydroxide has a minimum solubility.

In a preferred embodiment, the pH of the industrial wastewater is raised to a pH of about 7 to about 10. The pH level of the industrial wastewater depends on the metal present. Any base that allows for pH adjustment to the desired range is envisioned. For example, the base selected for pH adjustment is selected from the group consisting of hydroxides of: sodium, potassium, magnesium, calcium, ammonium and the like.

In one embodiment, the industrial wastewater containing heavy metal is from an industrial process selected from the group consisting of: semiconductor manufacturing; circuit board manufacturing; metal finishing; metal plating; power industries; refining; automotive.

In another embodiment, the heavy metals being removed from the industrial wastewater are selected from the group consisting of: Pb; Cu; Zn; Cd; Ni; Hg; Ag; Co; Pd; Sn; Sb; and a combination thereof.

The ethylene dichloride ammonia polymers are prepared by the reaction of ethylene dichloride and ammonia. The starting ethylene dichloride ammonia polymers may have a molecular weight range of from about 500 to about 2,000,000 and generally have a molecular weight range of 500-100,000. In a preferred embodiment the molecular weight is 1,500 to 10,000, with a most preferred molecular weight range being 1,500-5,000. A typical reaction for producing these polymers is described in U.S. Patent No. 5,346,627. The polymers may also be obtained from Nalco Company, 1601 West Diehl Road, Naperville, IL.

In one embodiment, the effective amount of water-soluble ethylene dichloride- ammonia polymer added to the industrial wastewater is from 10 ppm to about 10,000 ppm active solids.

In another embodiment, the water-soluble ethylene dichloride ammonia polymer added to the industrial wastewater has a molecular weight of about 2,000 to about 2,000,000 daltons.

In another embodiment, the driving force for passage of the treated industrial wastewater through the submerged membrane is positive or negative pressure.

In another embodiment, the treated industrial wastewater that passes through the submerged microfiltration membrane or ultrafiltration membrane may be further processed through one or more membranes. In yet a further embodiment, the additional membrane is either a reverse osmosis membrane or a nanofiltration membrane.

The submerged membranes utilized to process industrial wastewater containing heavy metals may have various types of physical and chemical parameters. With respect to physical parameters, in one embodiment, the ultrafiltration membrane has a pore size in the range of 0.003 to 0.1 µm. In another embodiment, the microfiltration membrane has a pore size in the range of 0.1 to 10 µm. In another embodiment, the submerged membrane has a configuration selected from the group consisting of a hollow fiber configuration; a flat plate configuration; or a combination thereof. In another embodiment, the membrane has a spiral wound configuration. In another embodiment, the submerged membrane has a capillary configuration.

With respect to chemical parameters, in one embodiment, the submerged membrane is polymeric. In another embodiment, the membrane is inorganic. In yet another embodiment, the membrane is stainless steeL

There are other physical and chemical membrane parameters that may be implemented for the claimed invention.

After the industrial wastewater is treated with the water-soluble ethylene dichloride ammonia polymer, the wastewater may be further treated with one or more water-soluble polymers to further increase the particle size and enhance the membrane flux.

In one embodiment, the water-soluble polymers are selected from the group consisting of: amphoteric polymers; cationic polymers; anionic polymers; and zwitterionic polymers.

In another embodiment, the water soluble polymers have a molecular weight from 100,000 to about 2,000,000 daltons.

In another embodiment, the amphoteric polymers are selected from the group consisting of: dimethylaminoethyl acrylate methyl chloride quaternary salt (DMAEA.MCQ) /acrylic acid copolymer, diallyldimethylammonium chloride/acrylic acid copolymer, dimethylaminoethyl acrylate methyl chloride salt/N,N-dimethyl-N-methacrylamidopropyl-N-(3-sulfopropyl)-ammonium betaine copolymer, acrylic acid/N,N-dimethyl-N-methacrylamidopropyl-N-(3-sulfopropyl)-ammonium betaine copolymer and DMAEA.MCQ/Acrylic acid/N,N-dimethyl-N-methacrylamidopropyl-N-(3-sulfopropyl)-ammonium betaine terpolymer.

In another embodiment, the dosage of the amphoteric polymers is from about 1ppm to about 2000 ppm of active solids.

In another embodiment, the amphoteric polymers have a molecular weight of about 5,000 to about 2,000,000 daltons.

In another embodiment, the amphoteric polymers have a cationic charge equivalent to anionic mole charge equivalent ratio of about 3.0:7.0 to about 9.8:0.2.

In another embodiment, the cationic polymers are selected from the group consisting of: polydiallyldimethylammonium chloride (polyDADMAC); polyethyleneimine; polyepiamine; polyepiamine crosslinked with ammonia or ethylenediamine; condensation polymer of ethylenedichloride and ammonia; condensation polymer of triethanolamine and tall oil fatty acid; poly(dimethylaminoethylmethacrylate sulfuric acid salt); and poly(dimethylaminoethylacrylate methyl chloride quaternary salt).

In another embodiment, the cationic polymers are copolymers of acrylamide (AcAm) and one or more cationic monomers selected from the group consisting of: diallyldimethylammonium chloride; dimethylaminoethylacrylate methyl chloride quaternary salt; dimethylaminoethylmethacrylate methyl chloride quaternary salt; and dimethylaminoethylacrylate benzyl chloride quaternary salt (DMAEA.BCQ)

In another embodiment, the dosage of cationic polymers is from about 0.1 ppm to about 1000 ppm active solids

In another embodiment, the cationic polymers have a cationic charge of at least 2 mole percent.

In another embodiment, the cationic polymers have a cationic charge of 100 mole percent.

In another embodiment, the cationic polymers have a molecular weight of about 2,000 to about 10,000,000 daltons.

In another embodiment, the cationic polymers have a molecular weight of about 20,000 to about 2,000,000 daltons.

In another embodiment, the zwitterionic polymers are composed of about 1 to about 99 mole percent of N,N-dimethyl-N-methacrylamidopropyl-N-(3-sulfopropyl)-ammonium betaine and about 99 to about 1 mole percent of one or more nonionic monomers.

According to the invention, the membrane separation process is selected from the group consisting of: a cross-flow membrane separation process, i.e. with continuous aeration for membrane scouring; and semi-dead end flow membrane separation process, i.e. with intermittent aeration for membrane scouring.

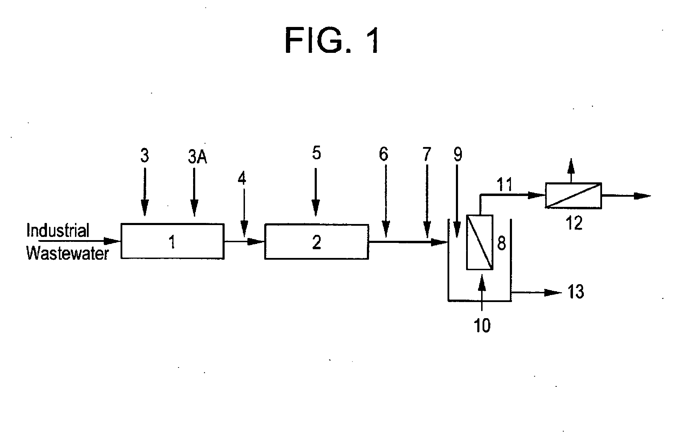

A potential industrial wastewater treatment scheme is shown in Figure 1.

Referring to Figure 1, industrial wastewater containing heavy metals is collected in a receptacle (1), in which acid or base is added through a line (3) to adjust pH to 3-4. The chelant scavenger such as iron compound is then added through a line (3A). This water then flows in to a receptacle (2), in which the pH is adjusted to 8-10 through in-line (4) or direct (5) addition of base in the receptacle (2). From the receptacle (2) the water then flows to a receptacle (8) in which an ultrafiltration or microfiltration membrane (10) is submerged. Aeration may be applied to the ultrafiltration or microfiltration membrane. The polymeric chelant such as ethylene dichloride-ammonia polymer may be added in-line (6) or directly (9) in to a membrane tank (8). After ethylene dichloride ammonia polymers are added, one or more water-soluble polymers may be added optionally in-line (7) before the water flows into membrane tank (8). The permeate (11) from the submerged ultrafiltration or microfiltration membrane process may be optionally treated by passing the permeate through an additional membrane (12) and the reject (concentrate) (13) may be sent for further dewatering or disposal.

The following examples are not intended to limit the scope of the claimed invention.

### EXAMPLES

This invention was tested by conducting experiments with a submerged flat-plate microfiltration membrane having a 0.4 µm pore size and 0.1 m² membranes area and industrial wastewater. Membrane performance was determined by conducting a critical flux study in which the rate of change of trans-membrane pressure, TMP, with time was measured at different fluxes. The flux at which the TMP increases abruptly is defined as the critical flux. The higher the critical flux, the lower the membrane area required for a given capacity and therefore lower the capital cost. Metal concentration in the feed and permeate was measured using Perkin Elmer Atomic Absorption Spectrometer, (Model AA200, Boston, MA). Permeate turbidity was measured by a Hach Turbidimeter (Hach, Ames, IA), that is sensitive to 0.06 NTU (Nephelometric Turbidimetric Unit).

### Example 1

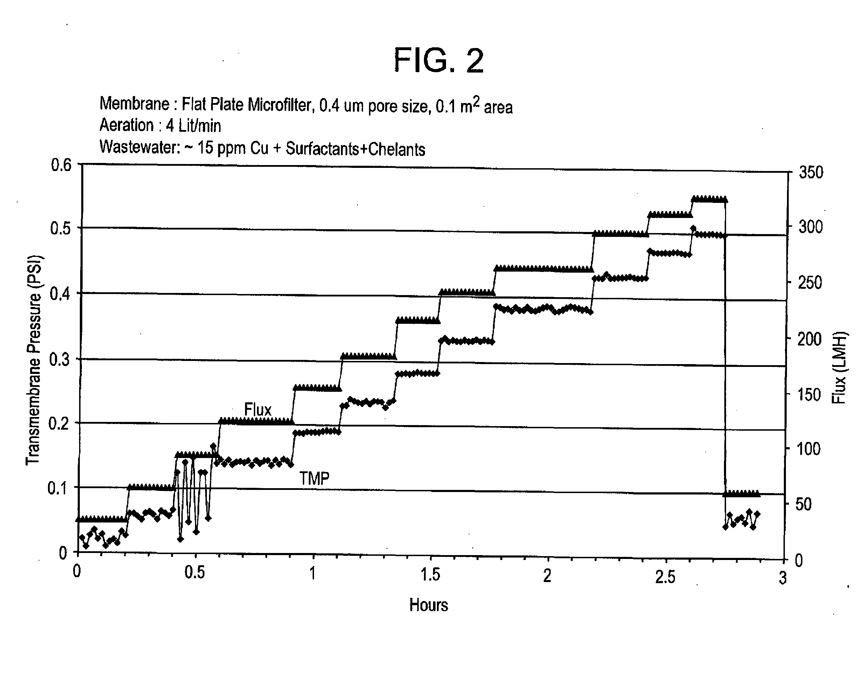

Industrial wastewater containing 15 ppm of copper, surfactants, and chelants was obtained from a circuit board manufacturing company and placed in a tank equipped with an overhead mixer. The pH was adjusted to 3.0 with sulphuric acid. Then 190 ppm ferric sulphate was added and mixed for 2 minutes. The pH was then adjusted to 8.0 with 25% sodium hydroxide and a 180 ppm of ethylene dichloride-ammonia polymer, functionalized with carbon disulfide and available from Nalco Company, 1601 West Diehl Road, Naperville, IL, was added and mixed for 3 minutes. This treated wastewater was then placed in membrane tank. Initially, lower flux of 30 LMH was applied while monitoring the TMP. After 10 minutes, flux was increased to 59 LMH and again the TMP measured. This process was continued up to 300 LMH flux. During these measurements, permeate was recycled back into the feed tank and no concentrate was purged out, which means the metal and solids concentration in the membrane tank was constant. Permeate metal concentration and turbidity was also measured at each flux. The flux-TMP data is shown in Figure 2. The turbidity of permeate was 0.09-0.12 NTU at all fluxes. The permeate Cu⁺⁺ concentration remained between 0.1-1 ppm throughout this experiment. These metal concentrations are as desired or lower than required for discharge into water bodies.

As seen from Figure 2, the TMP was below 69 mbar (1 psi), even at the highest flux of 320 LMH. Secondly, the TMP did not increase significantly with time at any flux. As a reference, submerged membranes are operated at only 10-40 LMH for high solids application such as in Membrane Bioreactor, with maximum allowed TMP of 276-345 mbar (4-5 psi) above which membranes have to be cleaned. Thus, this example illustrated that said ethylene dichloride-ammonia polymer treatment allows submerged membranes to be operated at higher fluxes while resulting in permeate with very low metal level and turbidity. Such a high water quality qualifies for the water reuse option with or without further treatment.

### Example 2

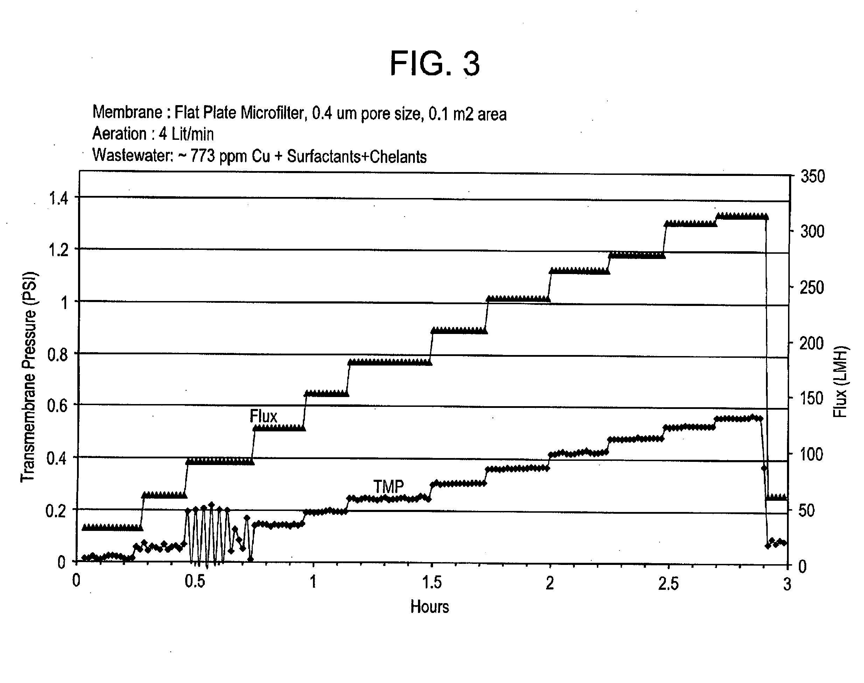

Similar protocol was used as in Example 1, but with industrial wastewater containing 773 ppm Cu and also surfactants and chelants. This wastewater was also obtained from circuit board manufacturing company. The ferric sulphate and dosage of said ethylene dichloride-ammonia polymer used in this example were 3000 ppm and 2100 ppm respectively. The TMP-flux data is shown in Figure 3. Even in presence of much higher level metal, other foulants and treatment chemistries, critical flux was not detected even after 300 LMH flux operation. The permeate turbidity was again 0.09-0.12 NTU and permeate Cu⁺⁺ varied between 0.09 to 14 ppm. The reduction of Cu⁺⁺ from 773 to even 14 ppm is over a 98% reduction, which is significant, while allowing the stable operation, i.e. no membrane fouling, at higher fluxes.

### Example 3

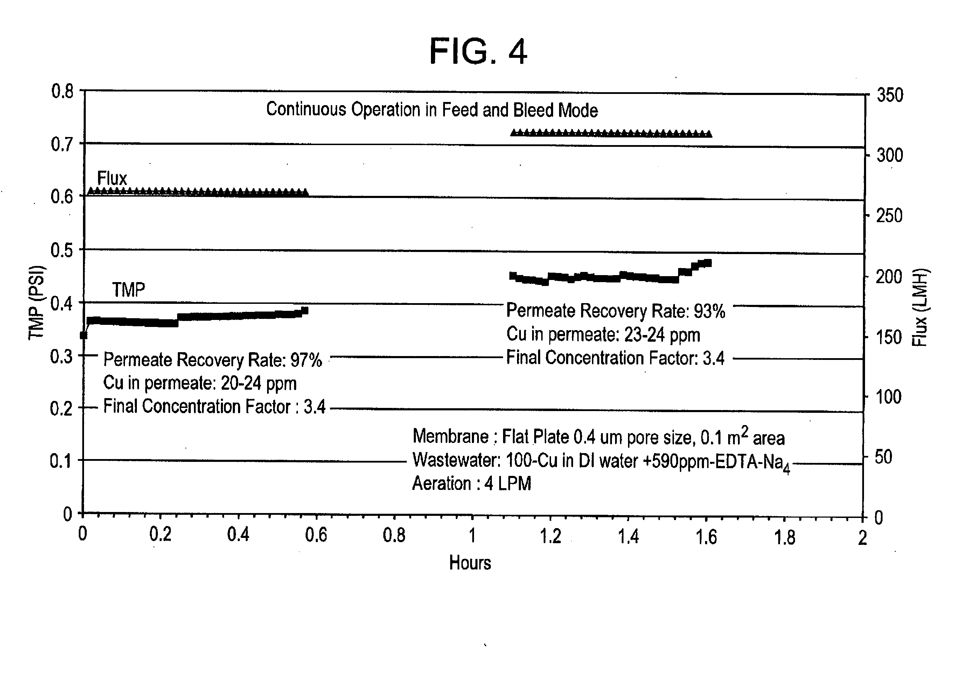

In this example, 24 L of simulated wastewater containing 100 ppm Cu⁺⁺ and 590 ppm EDTA-Na₄ (Tetrasodium salt of ethylene diamine tetra-acetic acid) was treated the same way as in Example 1. The ferric sulphate and said ethylene dichloride-ammonia polymer were 1300 ppm and 300 ppm, respectively. After polymeric chelant treatment, 5 ppm of a DMAEA.MCQ-AcAm copolymer having 50 mole % cationic charge, was also added and mixed for 2 minutes. Here, both permeate and reject/concentrate were discharged while constantly adding the treated feed in the membrane tank to maintain the level of 7 L. The final concentration factor in Figure 4 means a ratio of initial feed volume (24 L) / final potentate volume (7 L), i.e. the solids in the feed were concentrated 3.4 times at the end of the experiment at each of the both fluxes studied.

As seen from Figure 4, even after 3.4 times concentration, TMP remained low and almost constant with time (or volume concentration) at both 266 and 317 LMH fluxes. In this example as well, turbidity was < 0.1 NTU and Cu⁺⁺ level in the permeate was 20-24 ppm. This Cu⁺⁺ level can be further reduced by optimizing chemical treatment, without affecting membrane performance.

## Claims

1. A method of removing one or more heavy metals from industrial wastewater by use of a membrane separation process comprising the following steps:
a. collecting an industrial wastewater containing heavy metals in a receptacle (1) suitable to hold said industrial wastewater;
b. adjusting the pH of said system (4) to achieve hydroxide precipitation of said heavy metal in said industrial wastewater;
c. adding an effective amount of a water soluble ethylene dichloride ammonia polymer (6, 9) having a molecular weight of from about 500 to about 2,000,000 daltons that contain from about 5 to about 50 mole percent of dithiocarbamate salt groups to react with said heavy metals in said industrial wastewater system;
d. passing said treated industrial wastewater through a submerged membrane (10) with continous aeration for membrane scanning to establish a cross-flow membrane separation process or with intermittent aeration for membrane scanning to establish a semi dead-end membrane separation process; wherein said submerged membrane is an ultrafiltration membrane or a microfiltration membrane; and
e. optionally back-flushing said membrane to remove solids from the membrane surface.

2. The method of claim 1, wherein said effective amount of said water soluble ethylene dichloride ammonia polymer is from 10 ppm to about 10,000 ppm.

3. The method of claim 1 further comprising the step of: adjusting the pH (3) of said industrial wastewater systems, after step a and before step b, to de-complex metals from chelants, if present, in said wastewater system and subsequently or simultaneously adding one or more chelant scavengers (3A).

4. The method of claim 1, wherein a driving force for passage of said treated industrial wastewater through said submerged membrane is positive or negative pressure.

5. The method of claim 1 further comprising treating the industrial wastewater with one or more further water-soluble polymers after step c and before passing through said submerged membrane.

6. The method of claim 1, wherein the water soluble ethylene dichloride ammonia polymer has a molecular weight of about 2,000 to about 2,000,000 daltons.

7. The method of claim 5, wherein said one or more further water-soluble polymers are selected from a group consisting of: amphoteric polymers, cationic polymers, zwitterionic polymers, or anionic polymers and a combination thereof.

8. The method of claim 1 further comprising: passing a filtrate from said membrane through an additional membrane (12).

9. The method of claim 8, wherein said additional membrane is a reverse osmosis membrane.

10. The method of claim 8, wherein said additional membrane is a nanofiltration membrane.

11. The method of claim 1, wherein said submerged membrane has a configuration selected from the group consisting of: a hollow fiber configuration, a flat plate configuration, or a combination thereof.

12. The method of claim 5, wherein said one or more further water soluble polymers have a molecular weight from 100,000 to about 2,000,000 daltons.

13. The method of claim 1, wherein the heavy metals in said industrial wastewater are selected from the group consisting of: Pb, Cu, Zn, Cd, Ni, Hg, Ag, Co, Pd, Sn, and Sb or a combination thereof.

14. The method of claim 1, wherein the said industrial wastewater is from an industrial process selected from the group consisting of: semiconductor manufacturing, circuit board industry, metal finishing, metal plating, power industries, refining, automotive.

15. The method of claim 3 wherein said pH adjustment after step a and before step b is to less than 4.

16. The method of claim 3 wherein said chelant scavengers contain Ca or Mg or Al or Fe.

17. The method of claim 16 wherein said chelant scavenger containing Fe is selected from the group consisting of: ferrous chloride, ferrous sulfate, ferric chloride, ferric sulfate, or a combination thereof.

## Patentansprüche

1. Verfahren zur Entfernung eines oder mehrerer Schwermetalle aus industriellem Abwasser durch Verwendung eines Membran-Trennverfahrens, umfassend die folgenden Schritte:
a. Sammeln von industriellem Abwasser, welches Schwermetalle enthält, in einem Sammelbehälter (1), welcher geeignet ist, industrielles Abwasser aufzunehmen;
b. Einstellen des pH-Werts des Systems (4), um einen Hydroxid-Niederschlag des Schwermetalls im industriellen Abwasser zu erreichen;
c. Hinzufügen einer wirksamen Menge an wasserlöslichem Ethylendichlorid-Ammoniak-Polymer (6, 9) mit einer Molekularmasse von etwa 500 bis etwa 2.000.000 Dalton, welches von etwa 5 bis etwa 50 Molprozent an Dithiocarbamat-Salzgruppen enthält, um mit den Schwermetallen in dem industriellen Abwassersystem zu reagieren;
d. Durchleiten des behandelten industriellen Abwassers durch eine untergetauchte Membran (10) mit fortwährender Belüftung zur Membranspülung, um ein Querstrom-Membran-Trennverfahren zu etablieren, oder mit periodischer Belüftung zur Membranspülung, um ein Semi-Dead-End-Membran-Trennverfahren zu etablieren, wobei die untergetauchte Membran eine Ultrafiltrationsmembran oder eine Mikrofiltrationsmembran ist, sowie
e. optional das Rückspülen der Membran, um Feststoffe von der Oberfläche der Membran zu entfernen.

2. Verfahren nach Anspruch 1, wobei die wirksame Menge an wasserlöslichem Ethylendichlorid-Ammoniak-Polymer von 10 ppm bis etwa 10.000 ppm reicht.

3. Verfahren nach Anspruch 1, ferner umfassend den Schritt des Einstellens des pH-Werts (3) der industriellen Abwassersysteme, nach Schritt a und vor Schritt b, um im Abwassersystem Metalle von Komplexbildnern, sofern vorhanden, zu befreien, und anschließend oder gleichzeitig einen oder mehrere Komplexbildner-Fänger (3A) hinzuzufügen.

4. Verfahren nach Anspruch 1, wobei eine Triebkraft zum Durchleiten des behandelten industriellen Abwassers durch die untergetauchte Membran ein positiver oder ein negativer Druck ist.

5. Verfahren nach Anspruch 1, ferner umfassend das Behandeln des industriellen Abwassers mit einem oder mehreren weiteren wasserlöslichen Polymeren nach Schritt c und vor dem Durchleiten durch die untergetauchte Membran.

6. Verfahren nach Anspruch 1, wobei das wasserlösliche Ethylendichlorid-Ammoniak-Polymer eine Molekularmasse von etwa 2.000 bis etwa 2.000.000 Dalton aufweist.

7. Verfahren nach Anspruch 5, wobei das eine oder die mehreren weiteren wasserlöslichen Polymere ausgewählt sind aus einer Gruppe bestehend aus: amphoteren Polymeren, kationischen Polymeren, zwitterionischen Polymeren oder anionischen Polymeren sowie einer Kombination derselben.

8. Verfahren nach Anspruch 1, ferner umfassend: Durchleiten eines Filtrats von der Membran durch eine zusätzliche Membran (12).

9. Verfahren nach Anspruch 8, wobei die zusätzliche Membran eine Umkehrosmose-Membran ist.

10. Verfahren nach Anspruch 8, wobei die zusätzliche Membran eine Nanofiltrationsmembran ist.

11. Verfahren nach Anspruch 1, wobei die untergetauchte Membran einen Aufbau aufweist, ausgewählt aus der Gruppe bestehend aus: einem Hohlfaser-Aufbau, einem Flachmembran-Aufbau oder einer Kombination davon.

12. Verfahren nach Anspruch 5, wobei das eine oder die mehreren weiteren wasserlöslichen Polymere eine Molekularmasse von 100.000 bis etwa 2.000.000 Dalton aufweisen.

13. Verfahren nach Anspruch 1, wobei die Schwermetalle in dem industriellen Abwasser ausgewählt sind aus der Gruppe bestehend aus: Pb, Cu. Zn, Cd, Ni, Hg, Ag, Co, Pd, Sn und Sb oder einer Kombination davon.

14. Verfahren nach Anspruch 1, wobei das industrielle Abwasser aus einem industriellen Verfahren stammt, ausgewählt aus der Gruppe bestehend aus: Halbleiterfabrikation, Leiterplatten-Industrie, Metalloberflächenbehandlung, Metallplattieren, Energie-Branchen, Raffinerien und Automobil-Branche.

15. Verfahren nach Anspruch 3, wobei das Einstellen des pH-Werts nach Schritt a und vor Schritt b auf einen Wert kleiner als 4 erfolgt.

16. Verfahren nach Anspruch 3, wobei die Komplexbildner-Fänger Ca oder Mg oder Al oder Fe enthalten.

17. Verfahren nach Anspruch 16, wobei der Fe enthaltende Komplexbildner-Fänger ausgewählt ist aus der Gruppe bestehend aus: Eisen(11)-chlorid, Eisen(II)-sulfat, Eisen(III)-chlorid, Eisen(III)-sulfat oder einer Kombination davon.

## Revendications

1. Procédé de retrait d'un ou plusieurs métaux lourds d'eaux usées industrielles en utilisant un processus de séparation par membrane comprenant les étapes suivantes consistant à :
a. collecter des eaux usées industrielles contenant des métaux lourds dans un réceptacle (1) adapté pour contenir lesdites eaux usées industrielles ;
b. ajuster le pH dudit système (4) pour réaliser une précipitation par hydroxyde desdits métaux lourds dans lesdites eaux usées industrielles ;
c. ajouter une quantité efficace de polymère d'ammoniaque dichlorure d'éthylène soluble dans l'eau (6, 9) ayant une masse moléculaire d'environ 500 à environ 2 000 000 daltons qui contient d'environ 5 à environ 50 pour cent en mole de groupes sel de dithiocarbamate pour réagir avec lesdits métaux lourds dans ledit système d'eaux usées industrielles ;
d. faire passer lesdites eaux usées industrielles traitées à travers une membrane immergée (10) avec une aération continue pour le décapage de membrane afin d'établir un processus de séparation par membrane d'écoulement transversal ou avec une aération intermittente pour le décapage par membrane afin d'établir un processus de séparation par membrane en semi-cul-de-sac, dans lequel ladite membrane immergée est une membrane d'ultrafiltration ou une membrane de microfiltration ; et
e. facultativement effectuer un rinçage à circulation inversée de ladite membrane afin de retirer des solides de la surface de membrane.

2. Procédé selon la revendication 1, dans lequel ladite quantité efficace dudit polymère d'ammoniaque dichlorure d'éthylène soluble dans l'eau est de 10 ppm à environ 10 000 ppm.

3. Procédé selon la revendication 1, comprenant en outre l'étape consistant à ajuster le pH (3) desdits systèmes d'eaux usées industrielles, après l'étape a et avant l'étape b, afin de décomplexer des métaux des chélateurs, s'il y en a, dans ledit système d'eaux usées et ensuite ou simultanément ajouter un ou plusieurs désactivateurs de chélateur (3A).

4. Procédé selon la revendication 1, dans lequel une force d'entraînement pour le passage desdites eaux usées industrielles traitées à travers ladite membrane immergée est une pression positive ou négative.

5. Procédé selon la revendication 1, comprenant en outre l'étape de traitement des eaux usées industrielles avec un ou plusieurs polymères solubles dans l'eau supplémentaires après l'étape c et avant le passage à travers ladite membrane immergée.

6. Procédé selon la revendication 1, dans lequel le polymère d'ammoniaque dichlorure d'éthylène soluble dans l'eau a une masse moléculaire d'environ 2 000 à environ 2 000 000 daltons.

7. Procédé selon la revendication 5, dans lequel lesdits un ou plusieurs polymères solubles dans l'eau sont choisis parmi un groupe consistant en : les polymères amphotères, les polymères cationiques, les polymères zwitterioniques ou les polymères anioniques et une combinaison de ceux-ci.

8. Procédé selon la revendication 1, comprenant en outre l'étape consistant à : faire passer un filtrat de ladite membrane à travers une membrane supplémentaire (12).

9. Procédé selon la revendication 8, dans lequel ladite membrane supplémentaire est une membrane d'osmose inverse.

10. Procédé selon la revendication 8, dans lequel ladite membrane supplémentaire est une membrane de nanofiltration.

11. Procédé selon la revendication 1, dans lequel ladite membrane immergée a une configuration choisie parmi le groupe consistant en : une configuration de fibre creuse, une configuration de plaque plate ou une combinaison de ces dernières.

12. Procédé selon la revendication 5, dans lequel lesdits un ou plusieurs polymères solubles dans l'eau ont une masse moléculaire de 100 000 à environ 2 000 000 daltons.

13. Procédé selon la revendication 1, dans lequel les métaux lourds dans lesdites eaux usées industrielles sont choisis parmi le groupe consistant en : Pb, Cu, Zn, Cd, Ni, Hg, Ag, Co, Pd, Sn et Sb ou une combinaison de ces derniers.

14. Procédé selon la revendication 1, dans lequel lesdites eaux usées industrielles proviennent d'un processus industriel choisi dans le groupe consistant en : la fabrication de semi-conducteurs, l'industrie des cartes de circuits imprimés, le parachèvement des métaux, le placage de métaux, les industries énergétiques, le raffinage, l'automobile.

15. Procédé selon la revendication 3, dans lequel ledit ajustement de pH après l'étape a et avant l'étape b est à moins de 4.

16. Procédé selon la revendication 3, dans lequel lesdits désactivateurs de chélateurs contiennent Ca, Mg, Al ou Fe.

17. Procédé selon la revendication 16, dans lequel ledit désactivateur de chélateur contenant Fe est choisi dans le groupe consistant en : le chlorure ferreux, le sulfate ferreux, le chlorure ferrique, le sulfate ferrique ou une combinaison de ces derniers.
